# EUROPEAN PATENT APPLICATION

(11) **EP 3 032 435 A1**
(43) Date of publication of application: **15.06.2016**
(21) Application number: 14307020.9
(22) Date of filing: 12.12.2014
(51) Int. Cl.: G06F 17/30

(54) **Method and apparatus for generating an audiovisual summary**

(71) Applicant: Thomson Licensing, 92130 Issy-les-Moulineaux (FR)
(72) Inventor: Oisel, Lionel, 35576 Cesson-Sévigné (FR); Allie, Valérie, 35576 Cesson-Sévigné (FR); Chevallier, Louis, 35576 Cesson-Sévigné (FR)
(74) Representative: Huchet, Anne

(57) **Abstract**

The present invention relates to method for generating an audiovisual summary of an event from a plurality of initial audiovisual contents, said audiovisual summary comprising a plurality of consecutive audiovisual segments, said method being characterized in that it comprises the steps of:
- splitting (S1) the video part of the initial audiovisual contents into a plurality of video segments according to at least one segmentation criterion;
- extracting (S2) a plurality of sounds from the initial audiovisual contents according to at least one extraction criterion;
- selecting (S3) at least one of said video segments according to a first selection criterion,
- selecting (S4), for the selected video segment, at least one of said sounds according to a second selection criterion, and
- associating (S7) the selected sound to the selected video segment in order to generate an audiovisual segment of said audiovisual summary.

## Description

### 1. Technical Field

The present invention relates generally to the field of the audiovisual summary generation.

### 2. Background Art

For an event like for example a wedding, a birthday, a family meeting, a concert, it is known to create a audiovisual summary of this event from a set of UGC (User Generated Content) audiovisual contents (or A/V contents) of this event provided by several different contributors. To do so, A/V contents are for example uploaded on a dedicated server, filtered according to some quality metrics and synchronized according to audio and/or video features. During a preliminary phase called de-rushing phase, the video contents are segmented into a plurality of video segments (or video excerpts). A plurality of video features are possibly extracted from and associated to each video segment. These video features are for example: the content quality of the video segment, the presence or absence of activity in the video segment, the number of faces in the video segment, the camera angle (large angle vs. close up) in the video segment...

Based on these video features and depending on the final expected result (e.g. duration of the audiovisual summary, dynamism of the editing...), a selection of some video segments, among all the video segments of all the audiovisual contents, is concatenated in order to obtain a final audiovisual summary. In order to make the result attractive and coherent, an independent audio track is classically added. This audio track mostly consists in a song that is correlated with the expected mood of the resulting audiovisual summary: it may be a quiet song for a romantic summary or pop/rock music for sports summary.

A first drawback of such an audiovisual summary generation is that the sound track (audio part of the summary) is too de-correlated or disconnected from the initial audiovisual contents provided by the different contributors.

Another drawback is that the sound track is not enough personalized since two audiovisual summaries may have the same sound track (the same song).

### 3. Summary of Invention

It would hence be desirable to provide a method for generating an audiovisual summary of an event showing improvements of the prior art.

Notably, it would be desirable to provide such a method, which would propose an audiovisual summary more dependent from the initial audiovisual contents.

Therefore, according to the invention, it is proposed to generate the sound track (audio part) of the audiovisual summary, for at least some parts of the video track of the summary, based at least on some parts of the initial audio contents.

The invention relates to a method for generating an audiovisual summary of an event from a plurality of initial audiovisual contents and/or audio contents and/or video contents, said audiovisual summary comprising a plurality of consecutive audiovisual segments, said method comprising the steps of:
- splitting the video part of the initial contents into a plurality of video segments according to at least one segmentation criterion,
- extracting a plurality of sounds from the initial contents according to at least one extraction criterion,
- selecting at least one of said video segments according to a first selection criterion,
- selecting, for the selected video segment, at least one of said sounds according to a second selection criterion, and
- associating the selected sound to the selected video segment in order to generate an audiovisual segment of said audiovisual summary.

The initial contents are contents associated to the event to be summarized and coming from picture capturing devices (e.g. smartphones, tablets, camcorders) and sound capturing device (microphones).

In this manner, the sound track of the audiovisual summary comprises audio parts of the initial contents and is, as such, correlated to these contents. The sound associated to at least one video segment of the audiovisual summary is a part of the initial audio contents.

In a particular embodiment, a timecode and a source identification code is allocated to each video segment and each extracted sound. In this embodiment, the sound to be associated to the selected video segment is selected among the extracted sounds having the same source identification code and/or the same timecode as the one(s) of the selected video segment.

In another particular embodiment, the sound to be associated to the selected video segment is selected based on a video content of selected video segment. For example, if the selected video segment shows a smiling face, a laugh sound extracted from the initial contents is associated to the selected video segment.

In another particular embodiment, the sound to be associated to the selected video segment is selected based on predetermined editing rules. For example, the editing rules can be such that the summary must comprise at regular time intervals laugh sounds and/or applause sounds.

In a particular embodiment, the method further comprises a step for concatenating the generated audiovisual segment with audiovisual segments of an intermediate audiovisual summary.

In these embodiments, it is possible that the time boundaries of a video segment do not correspond with the time boundaries of the sound selected for this video segment due to the fact that the video segment and the sound have not the same durations.

In a particular embodiment, the sound is selected such that its duration is lower than or equal to the duration of the selected video segment.

In a particular embodiment, the method further comprises a step for selecting a song segment based on a third selection criterion and a step for mixing said song to the selected sound. Advantageously, the duration of the song segment is substantially equal to the duration of the selected video segment and the audio level of the song segment is lowered during the selected sound. In this embodiment, the audio segment resulting from the mix of the selected sound and the song segment have the same duration as the one of the selected video segment.

In another embodiment, the selected sound has a duration higher than the duration of the video segment and the method comprises an additional step for processing the selected sound such that its duration becomes lower than or equal to the duration of the selected video segment. This processing may consist in sampling or cutting the selected sound or in increasing its rate.

The invention also concerns an apparatus for generating an audiovisual summary of an event from a plurality of initial audiovisual contents and/or audio contents and/or video contents, said audiovisual summary comprising a plurality of consecutive audiovisual segments, said apparatus comprising a processor configured for:
- splitting the initial contents into a plurality of video segments according to at least one segmentation criterion;
- extracting a plurality of sounds from the initial contents according to at least one extraction criterion;
- selecting at least one of said video segments according to a first selection criterion,
- selecting, for the selected video segment, at least one of said sounds according to a second selection criterion, and
- associating the selected sound to the selected video segment in order to generate an audiovisual segment of said audiovisual summary.

The invention also concerns a computer program product comprising a plurality of program code portions for carrying out the steps of the method described hereinabove, when said program is executed by a computer.

### 4. Brief description of the drawings

The invention can be better understood with reference to the following description and drawings, given by way of example and not limiting the scope of protection, and in which:
- Figure 1 is a flow chart of the successive steps of the method according to an embodiment of the invention; and
- Figure 2 is an exemplary architecture of an apparatus implementing the method according to the invention.

### 5. Description of embodiments

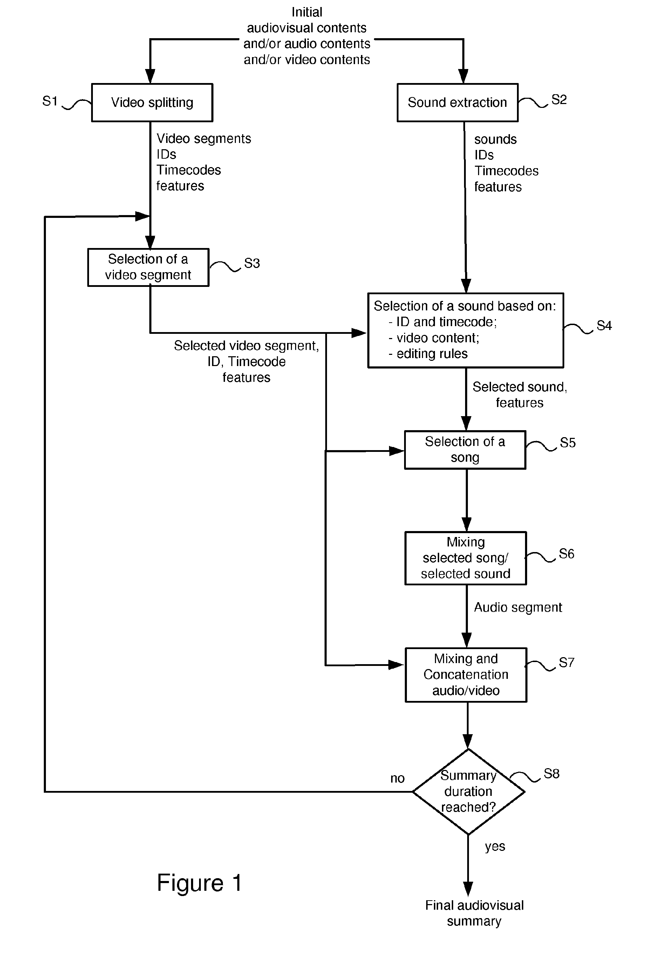

Figure 1 shows schematically the steps for generating an audio-visual summary of an event according to the invention.

The audiovisual summary of the event is built from audiovisual contents and/or audio contents and/or video contents provided by individual contributors or users. These contributors may or not belong to a community of users. These contents, called initial contents, are uploaded on a platform which can be a multimedia server, a computer or any device comprising storage means and processing means.

The initial contents can consist in video, audio/video or pure audio content. Audio and video contents are separated into two different flows. Each audiovisual content is de-multiplexed into an audio track and a video track. Advantageously, some synchronization information is kept between these two tracks. A same source identification code (ID) identifying the source of the track (which is the initial audiovisual content) and a same reference time code are associated to the two tracks.

In a step S1, the video track of the initial contents is split into a plurality of video segments (or video excerpts). This operation is a video de-rushing operation. During this operation, the video segments are analyzed in order to extract features like the content quality, the activity degree in the video segment, the number of faces present in the pictures of the video segment, the camera angle (large angle vs. close up) .... At the end of this step, different parameters are associated to each video segment: an ID code, a time code and features on the video content of the video segment. The ID code is a code identifying the source (initial content) of the video segment. For example, IDᵢ is associated to the video segments of the source i. The timecode of a video segment is computed based on time information coming from a step of synchronization of the initial contents. During this synchronization step, a reference timecode is for example computed for the beginning of each initial content and the timecode of a video segment issued from this initial content is computed from this reference timecode.

In a step S2, sounds are extracted from the sound track of the initial contents. This operation consists in retrieving some particular sounds in the audio track such as laughs, applause, cries, screams, shouts, ... Such an operation is described in the document "Two-level approach for detecting non-lexical audio events in spontaneous speech", Yan-Xiong Li, Sch. of Electron. & Inf. Eng., South China Univ. of Technol., Guangzhou, China, Qian-Hua He, Wei Li, Zhi-Feng Wang Audio Language and Image Processing (ICALIP), 2010 International Conference on , vol., no., pp.771,777, 23-25 Nov. 2010). The audio segments containing these different sounds are then separated in order to obtain singular sounds using for example a source separation algorithm like the algorithm described in "Multichannel nonnegative matrix factorization in convolutive mixtures for audio source separation," A. Ozerov and C. Fevotte, IEEE Trans. on Audio, Speech and Lang. Proc. special issue on Signal Models and Representations of Musical and Environmental Sounds, vol. 18, no. 3, pp. 550-563, March 2010. At the end of the step S3, a plurality of separated sounds with their associated timecode and source identification code (ID code) are outputted. IDᵢ is associated to the sounds issued from the source i. Features related to the content of the separated sound, like laughs, applause, cries..., are also associated to the separated sound. As for the video segments, the timecode associated to the sounds are computed based on time information coming from the synchronization step of the initial contents.

In a step S3, a first video segment is selected among all the video segments generated by step S1. The video segment is for example selected as a function of the desired mood of the final summary. The features associated to the video segments can be used for this selection. For example, for sports summary, a video segment among video segments with high activity is preferably selected. For weddings, some key events like kisses of newly-weds or some important speeches are selected. In a variant, the selection of a video segment having a given ID code and a given timecode is based on features of the sound having the same ID code and the same timecode.

In the next step, referenced step S4, a sound to be associated to the selected video segment (issued from step S3) is selected. Different criteria can be used for this sound selection.

According to a first selection criterion, the sound is selected among the separated sounds that occurred at the same time as the video selected video segment (sounds having the same timecode as the video segment). If several candidates are possible, the algorithm selects first the one with the same ID code.

If no synchronized separated sound exists, another selection criterion can be used. This second selection criterion can also be applied instead of the first selection criterion. According to this second selection criterion, a sound is selected based on the content of the video segment.

For example, if the video segment comprises smiling faces, a laugh sound is selected among the separated sounds issued from the step S2. The detection of smiling faces can be performed during the step S1 and the result of this detection can be present in the features associated to the video segment. In a variant, this detection is performed during the step S4.

As another example, if the video comprises people clapping their hand, applause sound is selected.

If the two previous selection criteria do not enable selecting a sound, a third selection criterion based on predetermined editing rules can be used. This third selection criterion can also be applied instead of the first or second selection criterion. A typical editing rule consists, for example, in introducing at regular time intervals laugh sound or applause sound in the summary. It can also consist in introducing alternatively laugh sound and applause sound in the summary. These rules are set by the summary editor.

At the end of the step S4, a video segment and an associated sound have been selected. The selected sound has not necessarily the same duration as the selected video segment since it is a selection criterion of the sound. As a consequence, the time boundaries of the video segment do not necessarily correspond with the time boundaries of the sound selected for this video segment.

In addition, even if the sound and the video segment have the same durations, the transition between two consecutive sounds associated to two consecutive video segments can be disturbing because the audio levels or the audio contents of the two consecutive sounds are too different.

In order to avoid these artifacts, it is proposed to mix a song segment with the selected sound and/or to apply fade in - fade out operation to the selected sound or to the mix selected sound/song. The addition of a song segment to the selected sound enables to adapt the duration of the sound to the duration of the video segment if the duration of the selected sound (step S4) is lower to the duration of the selected video segment (step S3). The fade in/fade out operation at the boundaries of the selected sound or the mix enables to smooth the audio transition between two consecutive sounds.

So, according to step S5, a song segment is selected according to a predetermined criterion. This song segment can for example be selected as a function of the mood desired by the editor (a melancholic song for funeral, a pop song for birthday, a romantic song for weddings) and/or the nature of the event (birthday, weeding, sports, holidays,...). For example, for a sport event like a car race, a song with strong beat can be selected. This song is extracted from a dedicated database.

Advantageously, the same song will be used for a plurality of consecutive audiovisual segments. A first segment of the song will be selected for a first audiovisual segment of the audiovisual summary and the next segment of the song will be selected for the next audiovisual segment of the audiovisual summary.

In a step S6, the selected song segment is mixed with the selected sound. The mix is performed in order to obtain an audio segment having a duration equal to the duration of the selected video segment. The duration of the selected song segment is advantageously equal to the duration of the selected video segment. And if the duration of the selected sound (step S4) is lower than the duration of the selected video segment (step S3), the audio level of the song segment is lowered during the selected sound while the audio level of the selected sound is set to a normal level.

If the selected sound has a duration higher than the duration of the selected video segment, the selected sound is processed in that its duration becomes lower than the duration of the selected video segment. In a variant, the duration of the sound can be part of the selection process of the sound (step S4). If the duration of a current sound is higher than the duration of the selected video segment, this sound is rejected (not selected). In another variant, the duration of the sound is not reduced. The selected sound is kept for the next video segment. The selection process of the sound (step S4) is modified to perform this possibility.

In order to avoid abrupt changes of audio levels at the boundaries of the selected sound, a fade in/fade out operation is advantageously applied at the boundaries of the selected sound.

The audio segment resulting from the step S4, or in a more elaborated embodiment, from the step S6, is then multiplexed to the selected video segment and the resulting audiovisual segment is concatenated (Step S7) with the previous audiovisual segments (intermediate summary) resulting from previous iterations of the method.

The steps S3-S7 are re-iterated until the video summary reaches a predetermined duration. If the predetermined duration is not reached, the steps S3-S7 are repeated.

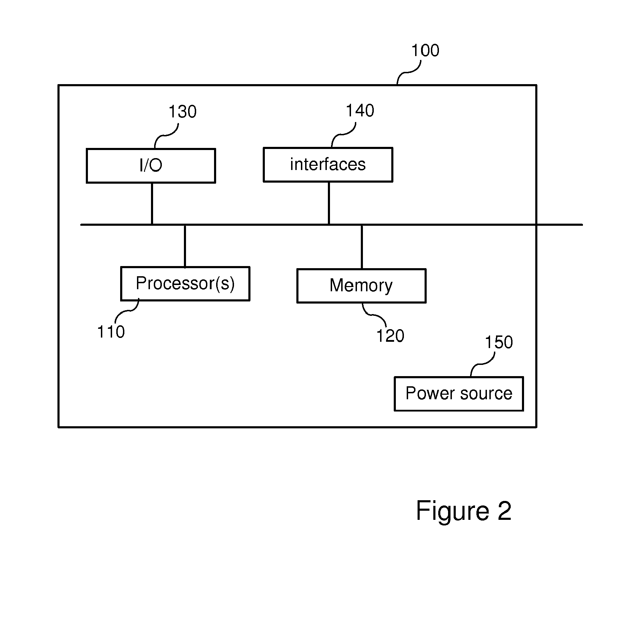

Figure 2 represents an exemplary architecture of an apparatus 100 configured to generate an audiovisual summary of an event from a plurality of initial contents according to any exemplary embodiment of the invention. The apparatus 100 comprises one or more processor(s) 110, which is(are), for example, a CPU, a GPU and/or a DSP (English acronym of Digital Signal Processor), along with internal memory 120 (e.g. RAM, ROM, EPROM). The apparatus 100 comprises one or several Input/Output interface(s) 130 adapted to display output information and/or allow a user to enter commands and/or data (e.g. a keyboard, a mouse, a touchpad, a webcam), network interface(s) or communication interface(s) 140 and a power source 150 which may be external to the apparatus 100. The initial contents image may be obtained from different contributors via the communication interface 140. This communication interface may be a wireline interface (for example a bus interface, a wide area network interface, a local area network interface) or a wireless interface (such as a IEEE 802.11 interface or a Bluetooth interface).

The generated audiovisual summary may be sent to a destination or stored in a remote or in a local memory, e.g. a video memory or a RAM, a hard disk. In a variant, the generated video summary is sent to a storage interface, e.g. an interface with a mass storage, a ROM, a flash memory, an optical disc or a magnetic support and/or transmitted over the communication interface 140, e.g. an interface to a point to point link, a communication bus, a point to multipoint link or a broadcast network.

According to an exemplary and non-limitative embodiment of the invention, the apparatus 100 further comprises a computer program stored in the memory 120. The computer program comprises instructions which, when executed by the apparatus 100, in particular by the processor 110, make the apparatus 100 carry out the method described with reference to figure 1. According to a variant, the computer program is stored externally to the apparatus 100 on a non-transitory digital data support, e.g. on an external storage medium such as a HDD, CD-ROM, DVD, a read-only and/or DVD drive and/or a DVD Read/Write drive, all known in the art. The apparatus 100 thus comprises an interface to read the computer program. Further, the apparatus 100 could access one or more Universal Serial Bus (USB)-type storage devices (e.g., "memory sticks.") through corresponding USB ports (not shown).

According to exemplary and non-limitative embodiments, the apparatus 100 is a device, which belongs to a set comprising:
- a mobile device ;
- a communication device;
- a game device ;
- a tablet (or tablet computer);
- a laptop ;
- an encoding chip;
- a still image server;
- a video server (e.g. a broadcast server, a video-on-demand server or a web server) ;
- a video uploading platform; and
- a display or a decoding chip.

The implementations described herein may be implemented in, for example, a method or a process, an apparatus, a software program, a data stream, or a signal. Even if only discussed in the context of a single form of implementation (for example, discussed only as a method or a device), the implementation of features discussed may also be implemented in other forms (for example a program). An apparatus may be implemented in, for example, appropriate hardware, software, and firmware.

The foregoing illustrates some of the possibilities for practicing the invention. Many other embodiments are possible within the scope of the invention. It is, therefore, intended that the foregoing description be regarded as illustrative rather than limiting, and that the scope of the invention is given by the appended claims together with their full range of equivalents

## Claims

1. Method for generating an audiovisual summary of an event from a plurality of initial audiovisual contents and/or audio contents and/or video contents, said audiovisual summary comprising a plurality of consecutive audiovisual segments, said method being **characterized in that** it comprises the steps of:
- splitting (S1) the video part of the initial contents into a plurality of video segments according to at least one segmentation criterion;
- extracting (S2) a plurality of sounds from the initial contents according to at least one extraction criterion;
- selecting (S3) at least one of said video segments according to a first selection criterion,
- selecting (S4), for the selected video segment, at least one of said sounds according to a second selection criterion, and
- associating (S7) the selected sound to the selected video segment in order to generate an audiovisual segment of said audiovisual summary.

2. Method according to claim 1, wherein a timecode and a source identification code is associated to each video segment and each extracted sound and wherein, according to said first selection criteria, the sound to be associated to the selected video segment is selected among the extracted sounds having the same source identification code and/or the same timecode as the one(s) of said selected video segment.

3. Method according to claim 1, wherein, according to said first selection criteria, the sound to be associated to the selected video segment is selected based on the video content of the selected video segment.

4. Method according to claim 1, wherein, according to said first selection criteria, the sound to be associated to the selected video segment is selected based on predetermined editing rules.

5. Method according to any one of claims 1 to 4, wherein it comprises a step (S7) for concatenating the generated audiovisual segment with audiovisual segments of an intermediate audiovisual summary.

6. Method according to any one of claims 1 to 5, wherein the sound is selected such that its duration is lower than or equal to the duration of the selected video segment.

7. Method according to any one of claims 1 to 6, wherein it further comprises a step (S5) for selecting a song segment based on a third selection criterion and a step (S6) for mixing said song segment to the selected sound.

8. Method according to claim 7, wherein the duration of the song segment is substantially equal to the duration of the selected video segment.

9. Method according to any one of claims 1 to 5, wherein the selected sound has a duration higher than the duration of the selected video segment and the method comprises a step for processing the selected sound such that the duration of the selected sound becomes lower than or equal to the duration of the video segment.

10. Apparatus for generating an audiovisual summary of an event from a plurality of initial audiovisual contents and/or audio contents and/or video contents, said audiovisual summary comprising a plurality of consecutive audiovisual segments, said apparatus comprising a processor configured for:
- splitting the initial contents into a plurality of video segments according to at least one segmentation criterion;
- extracting a plurality of sounds from the initial contents according to at least one extraction criterion;
- selecting at least one of said video segments according to a first selection criterion,
- selecting, for the selected video segment, at least one of said sounds according to a second selection criterion, and
- associating the selected sound to the selected video segment in order to generate an audiovisual segment of said audiovisual summary.

11. Computer program product comprising a plurality of program code portions for carrying out the steps of the method according to any one of claims 1 to 9, when said program is executed by a computer.
